# EUROPÄISCHE PATENTANMELDUNG

(11) **EP 1 584 662 A1**
(43) Veröffentlichungstag der Anmeldung: **12.10.2005**
(21) Anmeldenummer: 05006690.1
(22) Anmeldetag: 26.03.2005
(51) Int. Cl.: C08L 101/00, C08L 53/02, C08L 25/04

(54) **Verwendung von Wachsen als Gleitmittel für gefüllte Kunststoffe**

(30) Priorität: 06.04.2004 DE 102004016791
(71) Anmelder: Clariant GmbH, 65929 Frankfurt am Main (DE)
(72) Erfinder: Richter, Eric, Dr., 86672 Thierhaupten (DE)
(74) Vertreter: Paczkowski, Marcus

(57) **Zusammenfassung**

Die Erfindung betrifft die Verwendung von Wachsen als Gleitmittel für gefüllte Kunststoffe.

## Beschreibung

Die Erfindung betrifft die Verwendung von Wachsen als Gleitmittel für Füllstoffe enthaltende thermoplastische oder duroplastische Kunststoffe, die solche Wachse enthalten.

Unter Füllstoffen werden generell pulver- oder faserförmige Substanzen organischen oder anorganischen Ursprungs verstanden, welche in organischen Medien, Dispersionen oder Emulsionen dispergiert werden, um dem jeweiligen Endprodukt bestimmte Eigenschaften zu verleihen oder dessen Gestehungspreis zu senken.
Bei den Füllstoffen müssen anorganische und organische Materialien unterschieden werden. Von besonderer Bedeutung sind Calciumcarbonat, Calcium-Magnesium-Carbonat, Aluminiumsilikate, Siliciumdioxid, Magnesiumsilikate (Talkum), Bariumsulfat, Aluminium-Kalium-Natrium-Silikate, Metalle und -oxide, Aluminiumhydoxide, Ruße und Graphit, Holz- und Korkmehl, Holzspäne, Holzfasern, Glasfasern und Naturfasern (H.P. Schlumpf, "Filler and Reinforcements" in R. Gächter, H. Müller, Plastic Additives, 3. Ausgabe, Carl Hanser Verlag München 1993, S.525 - 591).

Füllstoffe werden in einem breiten Anwendungsfeld eingesetzt. Insbesondere sind hier die Kunststoffanwendungen, Lacke, Beschichtungsmaterialien, Papier, Baustoffe und Klebstoffe zu nennen. Je nach Anwendung sind verschiedene Eigenschaften der Füllstoffe relevant. Typische Kenngrößen sind die Brechzahl, die Bindemittelaufnahme, die spezifische Oberfläche, das Deckvermögen, der Abrieb (Verschleiß der Verarbeitungsmaschinen), der Glanz, die Kornform und die Korngrößenverteilung. Insbesondere bei faserförmigen Füllstoffen ist die Verträglichkeit zwischen dem Füllstoff und der Matrix von besonderem Interesse. Zur Verbesserung dieser Anbindung zwischen den beiden Stoffen werden z.B. Glasfasern mit geeigneten Substanzen beschichtet.

Im Laufe der letzten Jahrzehnte stieg die Bedeutung der Füllstoffe in der Kunststoffverarbeitung stetig an. Während man früher im Füllstoffzusatz in erster Linie entweder eine Verbilligung des Endproduktes oder die mengenmäßige Erhöhung des Fertigartikels anstrebte, nutzte man in der Folgezeit den Einfluss der Füllstoffe auf die Verarbeitungseigenschaften bzw. die Eigenschaften der Fertigprodukte aus. Mit Hilfe von Füllstoffen konnten Eigenschaften wie die Verarbeitungsgeschwindigkeit, die Dimensionsstabilität, die Entflammbarkeit, die Abriebfestigkeit, die elektrische Durchschlagfestigkeit oder die mechanischen Eigenschaften optimiert werden. Im Bereich der Kunststoffverarbeitung werden Füllstoffe insbesondere in Polyvinylchlorid, Polyethylen, Polypropylen und auch Gummi (natürliche und synthetische unvernetzte und vernetzte, z.B. durch Vulkanisation, Elastomere) eingesetzt. Technischen Thermoplasten (Polycarbonat, Polymethylmethacrylat, Polyamid, Polystyrol, etc.) werden nur seltener Füllstoffe zugesetzt.

Für die unterschiedlichsten Anwendungen haben sich holzgefüllte thermoplastische Kunststoffe als Stand der Technik etabliert. Dabei werden Holzmehl, Holzfasern oder Holzspäne in hohen Konzentrationen eingearbeitet. Üblich sind hierbei Füllgrade von 50 bis 90 Gew.-%. Als Matrixmaterial werden handelsübliche Thermoplaste eingesetzt. Insbesondere sind hier Polyvinylchlorid, Polypropylen und die unterschiedlichen Typen Polyethylen zu nennen. Seltener werden auch technische Thermoplaste wie Polystyrol oder andere Styrolpolymere (z.B. ABS) verwendet. Neben den genannten Hauptbestandteilen werden in solchen Anwendungen auch einige Additive zur Optimierung der Eigenschaften eingesetzt. So werden in geringen Mengen Paraffine und Amidwachse den Mischungen als Gleitmittel zugesetzt. Dadurch lässt sich eine etwas bessere Profiloberfläche erzielen. Außerdem werden polar modifizierte Polypropylenwachse zur Verbesserung der Anbindung des Füllstoffes an den Kunststoff eingesetzt. Ungelöste Probleme sind bisher die schnelle Alterung dieser Werkstoffe unter Witterungseinflüssen und die schlechte Dimensionsstabilität durch die Wasseraufnahme des in den Kunststoff eingearbeiteten Holzes. Außerdem sind bislang nur sehr niedrige Durchsätze durch die Extruder realisierbar. Die Liniengeschwindigkeiten sind im Vergleich zu dem Stand der Technik der übrigen kunststoffverarbeitenden Industrie sehr langsam.

Überraschender Weise wurde gefunden, dass der Zusatz von Wachsen zu gefüllten Kunststoffen anwendungstechnische Vorteile liefert. Der Einsatz von entsprechenden Produkten ermöglicht in der Extrusion glattere Oberflächen bei gleichzeitig höheren Extrusionsgeschwindigkeiten. Weiterhin wird die Wasseraufnahme von hydrophilen Füllstoffen retardiert und reduziert. Gleichzeitig wird eine verbesserte Dimensionsstabilität erreicht.

Die Erfindung betrifft daher die Verwendung von Wachsen als Gleitmittel für gefüllte Kunststoffe.

Bevorzugt handelt es sich bei den Wachsen um synthetische oder natürliche Wachse.

Bevorzugt handelt es sich bei den natürlichen Wachsen um Petroleumwachse, Montanwachse, tierische Wachse und/oder pflanzliche Wachse.

Bevorzugt handelt es sich bei den synthetischen Wachsen um Fettsäuren, Fettsäureester, Fettsäureamide, Fischer-Tropsch-Wachse, Polyolefinwachse und/oder polar modifizierte Polyolefinwachse.

Bevorzugt handelt es sich bei den natürlichen Wachsen um Montanwachse. Montanwachse sind Esterwachse und/oder Salze von Carbonsäuren. Es handelt sich insbesondere um Umsetzungsprodukte der Montanwachssäuren mit mehrwertigen niedermolekularen Alkoholen.

Bei diesen Umsetzungsprodukten handelt es sich um Mischungen aus der Montanwachssäure, dem Alkohol, den Produkten einer partiellen Umsetzung und den Produkten einer vollständigen Umsetzung von Montanwachssäure und dem Alkohol.

Bei den Alkoholen handelt es sich insbesondere um Ethylenglykol, Glycerin, Butandiol, Pentaerythrit, Dipentaerythrit und/oder Trimethylolpropan.

Bevorzugt handelt es bei den natürlichen Wachse um beispielsweise Pflanzenwachse wie Carnauba- oder Candelillawachs oder Wachse tierischer Herkunft wie z.B. Schellackwachs in Frage. Geeignete teilsynthetische Wachse sind beispielsweise gebleichte, gegebenenfalls chemisch z.B. durch Veresterung und/oder durch partielle Verseifung modifizierte Montanwachse. Entsprechende Produkte sind beispielsweise in Ullmann's Encyclopedia of Industrial Chemistry, 5. Aufl., Vol. A 28, Weinheim 1996 in Kapitel 2.2, 2.3 und 3.1-3.5, S. 110 - 126 beschrieben.

Bevorzugt handelt es sich um polare oder unpolare vollsynthetische Wachse, z.B. Polyolefinwachse. Unpolare Polyolefinwachse können durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Frage, wobei die Olefine, in der Regel Ethylen, bei hohen Drucken und Temperaturen zu mehr oder minder verzweigten Wachsen umgesetzt werden; daneben Verfahren, bei denen Ethylen und/oder höhere 1-Olefine mit Hilfe metallorganischer Katalysatoren, beispielsweise Ziegler-Natta- oder Metallocenkatalysatoren zu unverzweigten oder verzweigten Wachsen polymerisiert werden. Entsprechende Methoden zur Herstellung von Olefin-Homo- und Copolymerwachsen sind beispielsweise in Ullmann's Encyclopedia of Industrial Chemistry, 5. Aufl., Vol. A 28, Weinheim 1996 in Kapitel 6.1.1/6.1.2-(Hochdruckpolymerisation), Kap. 6.1.3. (Ziegler-Natta-Polymerisation, Polymerisation mit Metallocenkatalysatoren) sowie Kap. 6.1.4 (thermischer Abbau), S. 146-154 beschrieben. Polare Polyolefinwachse entstehen durch entsprechende Modifizierung von unpolaren Wachsen, z.B. durch Oxidation mit Luft oder durch Aufpfropfung polarer Olefinmonomere, beispielsweise α,β-ungesättigter Carbonsäuren und/oder deren Derivaten, etwa Acrylsäure oder Maleinsäureanhydrid und/oder subsituierte und/oder unsubstituierte Styrole und/oder Vinylsilanen. Ferner können polare Polyolefinwachse durch Copolymerisation von Ethylen mit polaren Comonomeren, beispielsweise Vinylacetat oder Acrylsäure hergestellt werden; weiterhin durch oxidativen Abbau von höhermolekularen, nicht wachsartigen Ethylen-Homo- und Copolymeren. Entsprechende Beispiele finden sich etwa in Ullmann's Encyclopedia of Industrial Chemistry, 5. Aufl., Vol. A 28, Weinheim 1996, Kap. 6.1.5, S. 155.

Bevorzugt handelt es sich bei den Polyolefinwachsen um Homo- und Copolymere verschiedener Alkene.

Bevorzugt handelt es sich bei den Polyolefinwachsen um Homo- und Copolymere des Ethens und Propens.

Bevorzugt handelt es sich bei den Polyolefinwachsen um Homo- und Copolymere hergestellt am Ziegler- oder Metallocene-Katalysatorkontakt.

Bevorzugt handelt es sich bei den Polyolefinwachsen um polar modifizierte Polyolefinwachse.

Bevorzugt handelt es sich bei den polar modifizierten Polyolefinwachsen um Oxidationsprodukte oder Pfropfcopolymere.

Besonders bevorzugt handelt es sich bei den polar modifizierten Polyolefinwachsen um Oxidationsprodukte.

Bevorzugt handelt es sich bei den oxidierten Polyolefinwachsen um Produkte mit einem Tropfpunkt von 90 bis 170°C.

Besonders bevorzugt handelt es sich bei den oxidierten Polyolefinwachsen um Produkte mit einem Tropfpunkt von 95 bis 130°C.

Bevorzugt handelt es sich bei den oxidierten Polyolefinwachsen um Produkte mit einer Schmelzviskosität bei 140°C von 1 bis 10000 mPas.

Besonders bevorzugt handelt es sich bei den oxidierten Polyolefinwachsen um Produkte mit einer Schmelzviskosität bei 140°C von 10 bis 1000 mPas.

Bevorzugt handelt es sich bei den oxidierten Polyolefinwachsen um Produkte mit einer Säurezahl von 1 bis 50 mg KOH/g.

Besonders bevorzugt handelt es sich bei den oxidierten Polyolefinwachsen um Produkte mit einer Säurezahl von 5 bis 30 mg KOH/g.

Bevorzugt werden die Wachse in einer Menge von 0,05 bis 10 Gew.-%, bezogen auf die Gesamtrezeptur, eingesetzt.

Besonders bevorzugt werden die Wachse in einer Menge von 1,0 bis 6,0 Gew.-%, bezogen auf die Gesamtrezeptur, eingesetzt.

Bevorzugt handelt es sich bei den Füllstoffen um anorganische und/oder organische Füllstoffe.

Bevorzugt handelt es sich bei den anorganischen Füllstoffen um Calciumcarbonat, Calcium-Magnesium-Carbonat, Aluminiumsilikate, Siliciumdioxid, Magnesiumsilikate (Talkum), Bariumsulfat, Aluminium-Kalium-Natrium-Silikate, Metalle und -oxide und/oder Aluminiumhydoxide.

Bevorzugt handelt es sich bei den organischen Füllstoffen um Ruße und Graphit, Holz- und Korkmehl, Holzspäne, Holzfasern, Glasfasern und Naturfasern und/oder organische Pigmente.

Bevorzugt werden die Füllstoffe in einer Menge von 1 bis 99 Gew.-% bezogen auf die Gesamtmischung eingesetzt.

Besonders bevorzugt werden die Füllstoffe in einer Menge von 50 bis 90 Gew.-% bezogen auf die Gesamtmischung eingesetzt.

Die Erfindung betrifft auch einen thermoplastischen oder duroplastischen Kunststoff, enthaltend 1 bis 99 Gew.-% eines mit dem beschriebenen Wachs beschichteten Füllstoffes.

Bevorzugt handelt es sich um einen thermoplastischen oder duroplastischen Kunststoff, enthaltend 50 bis 95 Gew.-% eines mit Wachs beschichteten Füllstoffes.

Bevorzugt handelt es sich bei dem thermoplastischer, vulkanisierbarer (Gummi) oder duroplastischen Kunststoff um Polyvinylchlorid, Polyethylen-HD (Hoher Dichte), Polyethylen-LD (Niedriger Dichte), Polyethylen-LLD (linear und niedriger Dichte), Polypropylen, Naturkautschuk, Synthesekautschuk, Polycarbonat, Polymethylmethacrylat, Polyamid, Styrolpolymere und/oder auch Blends aus verschiedenen Kunststoffen handelt.

Für das Einbringen des Wachses in die Mischung gibt es verschiedene Möglichkeiten: So kann das Wachs in einem bestehenden oder neuen Verfahrensschritt als wässrige Dispersion aufgetragen werden. Weiterhin gibt es die Möglichkeit, eine Wachsschmelze zu verdüsen und so auf den Füllstoff aufzubringen. Außerdem kann eine Mischung aus Füllstoff und Wachs in einem Mischaggregat (z.B. Flügelmischer) homogenisiert werden. Weiterhin ist es möglich das Wachs ohne weitere Vormischung direkt in die Verarbeitungsmaschine volumetrisch oder gravimetrisch zu dosieren und somit erst dort den Kontakt zwischen den einzelnen Komponenten herzustellen.

### Beispiele

Handelsübliche Holzspäne wurde mit unterschiedlichen Wachsen und einem handelsübliches Polypropylen vorgemischt und anschließend wurde diese Mischung auf einem Extruder compoundiert. Die granulierten Compounds wurden mittels Spritzguss zu Formteilen verarbeitet. Diese Teile wurden diversen Untersuchungen unterzogen. In die Versuche wurde ein auf dem Markt gängiges Produkt als Vergleich einbezogen. Diese Rezepturen sind mit B gekennzeichnet und stellen den Stand der Technik dar.
Compound A enthält 70 Gew.-% Holzspäne und 37 Gew.-% PP, 3 % Haftvermittler.
Compound B enthält 4 Gew.-% eines kommerziell erhältlichen Additivs für das System Holz/Polypropylen und 70 Gew.-% Holzspäne, 3 % Haftvermittler und 23 Gew.-% PP.
Compound C enthält 4 Gew.-% oxidiertes Polyethylenwachs als Additiv für das System Holz/Polypropylen und 70 Gew.-% Holzspäne, 3 % Haftvermittler und 23 Gew.-% PP.
Compound D enthält 4 Gew.-% Montanwachsesters als Additiv für das System Holz/Polypropylen und 70 Gew.-% Holzspäne, 3 % Haftvermittler und 23 Gew.-% PP.

Charakterisierung der besonders geeigneten Wachse:
Oxidiertes Polyethylenwachs
   - Tropfpunkt:: ca.104°C
   - Säurezahl:: ca. 17 mg KOH/g
   - Viskosität:: ca. 300 mPas bei 120°C
Montanwachsester
   - Tropfpunkt:: ca.76°C
   - Säurezahl:: max. 40 mg KOH/g
   - Verseifungszahl:: ca. 148 g KOH/g

Compoundherstellung: Alle pulverförmigen Bestandteile wurden in einem Taumelmischer homogen gemischt. Diese Mischung wurde mit einem Gleichdrall-Doppelschneckenextruder zu einem Granulat verarbeitet.
Die Untersuchung der Wasseraufnahme wurde nach DIN EN ISO 62 durchgeführt.

| | A | B | C | D |
|---|---|---|---|---|
| Werkzeugdruck [bar] | 118 | 99 | 69 | 56 |
| Massetemperatur 1 [°C] | 177 | 195 | 199 | 198 |
| Massetemperatur 2 [°C] | 194 | 210 | 215 | 215 |
| Massetemperatur (Werkzeug) [°C] | 191 | 191 | 190 | 186 |
| Belastung [%] | 16 | 13 | 10 | 10 |
| Gesamtteistung [W] | 6040 | 5500 | 4720 | 4630 |
| Drehzahl [min⁻¹] | 30 | 30 | 30 | 30 |
| Ausstoß [kg/h] | 6,8 | 6,9 | 7,2 | 7,2 |
| Aussehen Extrusionsband | schlecht | schlecht | gut | gut |
| Wasseraufnahme nach 20 Tagen [%] | 114 | 112 | 110 | 109 |

Maximaler Ausstoß mit guter Oberfläche:

| | A | B | C | D |
|---|---|---|---|---|
| Maximaler Ausstoß mit guter Oberfläche [kg/h] | 5 | 6 | 8 | 8,5 |

Die aufgelisteten Messwerte zeigen deutlich, dass das Compound C und D mit Abstand die besten Verarbeitungseigenschaften besitzt und die geringste Wasseraufnahme aufweist.

## Patentansprüche

1. Verwendung von Wachsen als Gleitmittel für gefüllte Kunststoffe.

2. Verwendung nach Anspruch 1, **dadurch gekennzeichnet, dass** es sich bei den Wachsen um synthetische oder natürliche Wachse handelt.

3. Verwendung nach Anspruch 1 oder 2, **dadurch gekennzeichnet, dass** es sich bei den natürlichen Wachsen um Petroleumwachse, Montanwachse, tierische Wachse und pflanzliche Wachse handelt.

4. Verwendung nach Anspruch 1 oder 3, **dadurch gekennzeichnet, dass** es sich bei den synthetischen Wachsen um Fettsäuren, Fettsäureester, Fettsäureamide, Fischer-Tropsch-Wachse, Polyolefinwachse und polar modifizierte Polyolefinwachse handelt.

5. Verwendung nach einem oder mehreren der Ansprüche 1 bis 4, **dadurch gekennzeichnet dass** es sich bei den natürlichen Wachsen um Montanwachse handelt.

6. Verwendung nach einem oder mehreren der Ansprüche 1 bis 5, **dadurch gekennzeichnet, dass** es sich bei den Montanwachsen um Umsetzungsprodukte der Montanwachssäure und niedermolekularen Alkoholen handelt.

7. Verwendung nach einem oder mehreren der Ansprüche 1 bis 6, **dadurch gekennzeichnet, dass** es sich bei den niedermolekularen Alkoholen insbesondere um Ethylenglykol, Glycerin, Butandiol, Pentaerythrit, Dipentaerythrit und/oder Trimethylolpropan handelt.

8. Verwendung nach einem oder mehreren der Ansprüche 1 bis 7, **dadurch gekennzeichnet, dass** es sich bei synthetischen Wachsen um Polyolefinwachse handelt.

9. Verwendung nach einem oder mehreren der Ansprüche 1 bis 8, **dadurch gekennzeichnet, dass** es sich bei synthetischen Wachsen um polar modifizierte Polyolefinwachse handelt.

10. Verwendung nach einem oder mehreren der Ansprüche 1 bis 9, **dadurch gekennzeichnet, dass** es sich um oxidierte Polyolefinwachse handelt.

11. Verwendung nach einem oder mehreren der Ansprüche 1 bis 10, **dadurch gekennzeichnet, dass** es sich bei den Füllstoffen um anorganische oder organische Füllstoffe handelt.

12. Verwendung nach Anspruch 11, **dadurch gekennzeichnet, dass** es sich bei den anorganischen Füllstoffen um Calciumcarbonat, Calcium-Magnesium-Carbonat, Aluminiumsilikate, Siliciumdioxid, Magnesiumsilikate (Talkum), Bariumsulfat, Aluminium-Kalium-Natrium-Silikate, Metalle und -oxide und/oder Aluminiumhydoxide, handelt.

13. Verwendung nach Anspruch 11, **dadurch gekennzeichnet, dass** es sich bei den organischen Füllstoffen um Ruße und Graphit, Holz- und Korkmehl, Holzspäne, Holzfasern, Glasfasern und Naturfasern und organische Pigmente handelt.

14. Verwendung nach einem oder mehreren der Ansprüche 1 bis 13, **dadurch gekennzeichnet, dass** die Wachse in einer Menge von 0,05 bis 10 Gew.-%, bezogen auf die Gesamtrezeptur, eingesetzt werden.

15. Verwendung nach einem oder mehreren der Ansprüche 1 bis 13, **dadurch gekennzeichnet, dass** die Wachse in einer Menge von 1,0 bis 6,0 Gew.-%, bezogen auf die Gesamtrezeptur, eingesetzt werden.

16. Verwendung nach einem oder mehreren der Ansprüche 1 bis 15, **dadurch gekennzeichnet, dass** ein thermoplastischer oder duroplastischer Kunststoff, 1 bis 99 Gew.-% eines Füllstoffes enthält.

17. Verwendung nach einem oder mehreren der Ansprüche 1 bis 16, **dadurch gekennzeichnet, dass** ein thermoplastischer oder duroplastischer Kunststoff, 50 bis 90 Gew.-% eines Füllstoffes enthält.

18. Thermoplastischer, vulkanisierbarer oder duroplastischer Kunststoff nach Anspruch 16 oder 17, **dadurch gekennzeichnet, dass** es sich bei dem Kunststoff um Polyvinylchlorid, Polyethylen, Polypropylen, Naturkautschuk, Synthesekautschuk, Polycarbonat, Polymethylmethacrylat, Polyamid, Styrolpolymere und/oder Blends hieraus handelt.
